(19) Europäisches Patentamt
European Patent Office
Office européen des brevets

(11) **EP 3 095 529 B1**

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **16170656.9**

(22) Anmeldetag: **20.06.2013**

(51) Internationale Patentklassifikation (IPC):
*B05D 7/08* (2006.01)   *B05D 3/06* (2006.01)
*B05D 7/06* (2006.01)   *B44C 1/00* (2006.01)
*E04C 2/20* (2006.01)   *E04C 2/30* (2006.01)
*E04B 2/00* (2006.01)   *E04B 5/02* (2006.01)
*B05D 5/06* (2006.01)   *B05D 7/00* (2006.01)
*E04F 13/08* (2006.01)   *E04F 13/16* (2006.01)
*E04F 15/02* (2006.01)   *E04F 15/10* (2006.01)

(52) Gemeinsame Patentklassifikation (CPC):
**B05D 7/586; B32B 21/02; B32B 21/08; B32B 27/308; E04F 15/102; E04F 15/107;** B05D 5/06; B05D 7/06

(54) **DIREKT BEDRUCKTES PANEEL MIT ZWEISCHICHTAUFBAU**

DIRECTLY PRINTED PANEL WITH TWO LAYER STRUCTURE

PANNEAU IMPRIME DIRECTEMENT COMPRENANT UNE BI-COUCHE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.11.2016 Patentblatt 2016/47**

(62) Dokumentnummer(n) der früheren Anmeldung(en) nach Art. 76 EPÜ:
**13732427.3 / 3 024 593**

(73) Patentinhaber: **Xylo Technologies AG**
**9052 Niederteufen (CH)**

(72) Erfinder: **DÖHRING, Dieter**
**01561 Großenhain (DE)**

(74) Vertreter: **Mader, Joachim**
**Bardehle Pagenberg Partnerschaft mbB**
**Patentanwälte, Rechtsanwälte**
**Prinzregentenplatz 7**
**81675 München (DE)**

(56) Entgegenhaltungen:
**WO-A1-2008/061765   WO-A1-2008/061791**
**WO-A1-2013/149644**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

**1. Gebiet der Erfindung**

Die vorliegende Erfindung betrifft ein Paneel, insbesondere ein Wand-, Decken- oder Fußbodenpaneel, mit einer verbesserten Oberflächenbeschichtung.

**2. Hintergrund der Erfindung**

Aus dem Stand der Technik ist eine Vielzahl von Paneelen für Wand-, Decken- oder Fußbodenbeläge bekannt. Beispielsweise sind als Fußbodenbelag im Innenbereich sogenannte Laminatpaneele weit verbreitet. Laminatpaneele sind relativ kostengünstig und lassen sich gut verarbeiten. Sie basieren üblicherweise auf einer Trägerplatte aus MDF- oder HDF-Werkstoff, auf dessen Oberseite ein mit einem Melaminharz imprägniertes Dekorpapier aufgebracht ist. Durch Verpressen unter Einwirkung von Hitze und Druck härten die Harze aus, sodass eine hochabriebfeste Oberfläche entsteht. Zur Erhöhung der Abriebfestigkeit werden der Oberfläche vor dem Verpressen zudem häufig abriebfeste Partikel zugegeben, insbesondere Korund. Als Alternative zu Laminatpaneelen sind seit einiger Zeit hochwertige Paneele auf PVC-Basis bekannt und werden unter dem Begriff LVT (Luxury Vinyl Tiles) vertrieben. Beispielsweise ist aus der DE 10 2006 058 655 A1 ein Bodenpaneel in der Form eines mehrschichtigen, rechteckigen Laminats mit einer Trägerplatte aus einem weichen Polyvinylchlorid (PVC) bekannt. Auf die weiche PVC-Schicht bzw. Platte wird eine Dekorpapierbahn aufgeklebt, um die sichtbare Oberfläche des PVCs mit einem Dekor zu versehen. Als Alternative zu derartigen Dekorpapierbahnen, die auf eine PVC Trägerplatte aufgebracht werden, ist auch die Verwendung von Kunststofffolien bekannt, die beispielsweise ebenfalls mit einem dekorativen Dekor bedruckt sind.

Aus der DE 10 2006 029 963 A1 ist beispielsweise ein Bodenbelag aus Polyvinylchlorid bekannt, der mit einer strapazierfähigen Lackschicht beschichtet ist, um die Haltbarkeit des PVC Bodenbelags zu verbessern. Die Lackschicht basiert dabei auf einem Acrylharz und wird mittels Strahlung ausgehärtet. Der Kern dieser Druckschrift liegt in der Zugabe von elektrisch leitfähigen Substanzen in das Harz, um den fertigen Bodenbelag mit antistatischen und/oder elektrisch leitenden Eigenschaften zu versehen.

In neuerer Zeit setzen sich am Markt LVT-Paneele durch, die eine härtere PVC-Platte mit einer Stärke von 4-6 mm als Untergrund haben und auf die eine weiche PVC-Schicht mit den Merkmalen wie oben beschrieben aufgebracht ist. In die härtere Platte werden spezielle Profile als Kopplungsmittel gefräst. Auf diese Weise lassen sich die Einzelpaneele leicht zu einer Fläche verlegen.

In einer Weiterentwicklung der oben beschriebenen Laminatpaneele wurden sogenannte direktbedruckte Paneele entwickelt. Bei diesen direktbedruckten Paneelen kommen in der Regel keine Papiere oder Folien mehr zur Anwendung, insbesondere kein Dekorpapier. Die Dekorschicht wird vielmehr unter Verwendung von Dispersionsfarben mittels eines Tiefdruckverfahrens direkt auf die Oberfläche der Trägerplatte gedruckt, welche üblicherweise einer geeigneten Vorbehandlung unterzogen wird. Insbesondere wird vor dem Drucken mittels Walzenapplizierung eine Grundierung aufgetragen. Nach Trocknen der Dekorschicht werden dann mehrere Harzschichten aufgetragen und ausgehärtet. Die Harzschichten dienen dabei als Schutzschicht sowie als abriebfeste Oberfläche. Auch hier werden häufig abriebfeste Partikel, wie etwa Korund, zugegeben, um die Abriebfestigkeit weiter zu erhöhen.

Aus der WO 2007/042258 ist beispielsweise ein Verfahren zur Direktbeschichtung von Holzwerkstoffplatten bekannt, bei dem in einem einzigen Beschichtungsschritt eine dicke Schutzschicht aus Kunststoffmaterial flüssig auf die Oberfläche einer Platte aufgetragen wird. Das verwendete Kunststoffmaterial ist dabei ein flüssiges, polymerisationfähiges Acrylatsystem, das über eine Polymerisation aushärtet.

Die genannten Paneele aus dem Stand der Technik haben abhängig von ihrem Aufbau, dem verwendeten Herstellungsverfahren und der verwendeten Materialien jeweils eigene Vor- und Nachteile. Laminatpaneele sind beispielsweise in der Regel einfach zu verlegen, bieten die Möglichkeit qualitativ hochwertige und beliebige Dekore zu realisieren und sind zudem sehr strapazierfähig. Nachteilig sind jedoch typischerweise die akustischen Eigenschaften von Laminatpaneelen, die insbesondere bei Verwendung als Fußbodenbelag lästige Laufgeräusche verursachen. Verantwortlich dafür ist die sehr harte Melaminschicht auf der Laminatoberfläche. Diese Melaminoberfläche wird zudem als kalt und unangenehm empfunden. Beläge auf PVC-Basis haben hervorragende akustische Eigenschaften und zudem eine angenehme Haptik und fühlen sich warm und relativ weich an, was bei vielen Anwendungen, etwa als Fußbodenbelag in einem Badezimmer, wünschenswert ist. Um jedoch optisch qualitativ hochwertige Oberflächen zu erzeugen, müssen derartige PVC-Böden relativ aufwendig verarbeitet werden und sind damit erheblich teurer als übliche Laminatpaneele, jedenfalls wenn sie vergleichbare optische Qualität aufweisen sollen. Von Nachteil ist bei PVC-Paneelen, dass in der weichen Oberfläche bei intensiver Nutzung schnell tiefe Kratzer entstehen, die das optische Bild stören. Von Nachteil ist ferner, dass PVC-Böden aus ökologischer Sicht nicht unbedenklich sind. Sie enthalten gesundheitsschädigende Weichmacher und Chlor ist im Brandfall bekanntermaßen sehr gefährlich (z.B. Chlordioxinbildung).

Direkt bedruckte Paneele räumen einige der Nachteile von Laminatpaneelen aus und benötigen etwa kein mit Melaminharz getränktes Dekorpapier, wodurch die Herstellung vereinfacht werden kann. Jedoch haben sie, was die akustischen Eigenschaften angeht sowohl was die Haptik angeht, ähnliche Nachteile wie Laminatpaneele. Die WO 2008/061791 A1 offenbart eine beschichtete Holzwerkstoffplatte, insbesondere ein Wand-, Decken oder Fußbodenpaneel, umfassend eine Vorderseite und eine Rückseite, wobei zumindest die Oberfläche der Vorderseite mit einer Polymerbeschichtung versehen ist, dadurch gekennzeichnet, dass die Polymerbeschichtung einen Härtegradient aufweist, so dass die Härte der Polymerschicht mit zunehmender Tiefe von der Oberfläche der Beschichtung her gesehen im Wesentlichen kontinuierlich abnimmt.

Im Lichte dieser bekannten Paneele bzw. Beläge stellt sich die vorliegende Erfindung die Aufgabe, ein Paneel, insbesondere ein Wand-, Decken- oder Fußbodenpaneel bereitzustellen, das möglichst viele der verschiedenen Vorteile der bekannten Paneele aufweist, dabei jedoch die inhärent vorhandenen Nachteile der verschiedenen Paneele möglichst minimiert. Zudem stellt sich weiter die Aufgabe, dass ein solches Paneel kostengünstig und auf relativ einfache Weise hergestellt werden kann. Eine weitere Aufgabe liegt in der Bereitstellung derartiger Paneele, die eine gute Haltbarkeit haben und mit denen die Realisierung von qualitativ hochwertigen dekorativen Mustern möglich ist.

Diese und andere Aufgaben, die beim Lesen der vorliegenden Beschreibung noch genannt werden oder vom Fachmann erkannt werden können, werden mit einem Paneel nach Anspruch 1 gelöst.

## 3. Ausführliche Beschreibung der Erfindung

Gemäß der vorliegenden Erfindung wird ein Paneel, wie etwa ein Wand-, Decken-, aber insbesondere ein Fußbodenpaneel bereitgestellt, das eine Trägerplatte mit einer Vorderseite und einer Rückseite umfasst, wobei zumindest an der Vorderseite ein Schichtsystem vorgesehen ist. Mit Vorderseite soll hierunter diejenige Seite verstanden werden, die im verlegten Zustand des Paneels, beispielsweise in Form eines Fußbodens, die Nutzseite darstellt die zum Betrachter weist. Die Trägerplatten können optional aufgeteilt werden in Paneele. An ihren Seitenkanten können die Paneele über Kopplungsmittel verfügen, wie insbesondere in Form von Nut- und Federelementen, wie sie aus dem Bereich der Fußbodenlaminatpaneele bekannt sind. Besonders geeignete Nut- und Federelemente erlauben ein Verbinden mehrerer gleichartiger Paneele in Richtungen parallel zur Vorderseite als auch senkrecht zur Vorderseite durch Formschluss. Paneele können natürlich auch einzeln dem Verfahrensablauf unterzogen werden, wenn diese Vorgehensweise auch weniger wirtschaftlich ist. Erfindungsgemäß weist das Schichtsystem von der Vorderseite ausgehend eine erste elastische Schicht auf, die aus einem Polymer besteht ist und im Folgenden als Schicht S1 bezeichnet wird. Diese erste Polymerschicht weist erfindungsgemäß eine Dicke von 20 - 600 $\mu$m auf und hat eine Martenshärte Ms1 von 0,5 - 120 N/mm$^2$, vorzugsweise zwischen 2 und 50 N/mm$^2$, noch mehr bevorzugt zwischen 2 und 40 N/mm$^2$, und am meisten bevorzugt zwischen 2 und 30 N/mm$^2$, sie ist mithin weich elastisch. Über dieser ersten elastischen Schicht wird eine zweite Schicht S2 vorgesehen, die eine Dicke von nur 10 - 180 $\mu$m hat und eine Martenshärte Ms2, die größer ist als die Martenshärte der ersten elastischen Schicht, d. h. Ms2 > Ms1. Die Martenshärte Ms2, bestimmt an der Paneeloberfläche liegt zwischen 5 und 300 N/mm$^2$, bevorzugt 15 und 150 N/mm$^2$, noch mehr bevorzugt zwischen 20 und 100 N/mm$^2$ und am meisten bevorzugt zwischen 25 und 90 N/mm$^2$. Der erfindungsgemäße Aufbau des Schichtsystems des Paneels hat zur Folge, dass sich die Oberfläche des derart beschichteten Paneels -unabhängig vom Material der Trägerplatte - relativ weich anfühlt und einen für das menschliche Empfinden angenehm warmen haptischen Eindruck hat. Insbesondere hat das Vorsehen der dicken elastischen Schicht S1 erhebliche akustische Vorteile. Im Vergleich zu einem Laminat-Referenzboden führt das erfindungsgemäße Schichtsystems zu einer signifikanten Geräuschdämpfungswirkung beim Begehen. So wird nach IHD-W 431 für einen Laminat-Referenzboden eine Lautheit von 26 Sone ermittelt. Der mit einer elastischen Schicht S1 und einer Schicht S2 versehene Boden weist ein Verbesserungsmaß von 10 - 70 % zu diesem Referenzboden auf. Ein PVC (LVT)-Boden wurde im Vergleich zur Referenz mit einem Verbesserungsmaß von 40 % gemessen.

Als Materialien für die Trägerplatte kommen eine Vielzahl von unterschiedlichen Werkstoffen in Frage, da die relevanten physikalischen Eigenschaften des erfindungsgemäßen Paneels im Wesentlichen durch das aufgebrachte Schichtsystem bestimmt werden. Generell bevorzugt ist die Trägerplatte des erfindungsgemäßen Paneels daher beispielsweise eine MDF-Platte, HDF-Platte, PVC-Platte, Zementfaser-Platte, WPC-Platte (wood powder composite), eine thermoplastische Recyclingplatte, eine Holzplatte, eine Holzfurnier-Platte oder etwa eine Parkettplatte, wie etwa eine Fertigparkettplatte. Wie eingangs erwähnt, kann die Trägerplatte vorteilhaft an ihren Seiten über Kopplungsmittel in Form von Nut- und Federelementen verfügen, sodass die erfindungsgemäßen Paneele einfach beispielsweise auf einem Fußboden zu einem Belag verlegt werden können.

Generell bevorzugt sind die Materialien für die Schichten S1 und S2 (und S3) Acylatsysteme bzw. basieren auf Acrylaten. Unter einem Acrylatsystem wird hierin ein polymerisationsfähiges Gemisch von doppelbindungshaltigen mono-, di- und mehrfachfunktionellen acrylsäurebasierenden Verbindungen verstanden. Typische Vertreter sind beispielsweise Dipropylenglycoldiacrylat, 1,6-Hexandioldiacrylat, Polyurethan-Acrylsäureester, Polyester-Acrylsäureester wie sie im Produktionsprogramm der Firma BASF unter dem Handelsnamen LaromerTM - Typen am Markt erhältlich sind.

Schicht S1 ist vorzugsweise ein Polymer auf Basis eines radikalisch polymerisierbaren Oligomers und/ oder Oligomergemisches. Bevorzugt basiert es auf strahlenhärtbaren Acrylatoligomeren (Acrylatsystem). Die Oligomere werden so ausgewählt, dass die Schicht möglichst dämpfende Eigenschaften hat, gekennzeichnet durch die Martenshärte vorzugsweise 0,5 - 120 N/mm$^2$, besonders bevorzugt 2-50 N/mm$^2$. Eine solche Oligomerformulierung besteht beispielsweise aus einem oder mehreren ungesättigten Acrylaten, die eine Polyester-, Polyether und/ oder Polyurethanstruktur enthalten, mit einer Funktionalität von 1- 4, bevorzugt < 2. Handelsübliche Beispiele dafür sind das Laromer PO 43 F, das Laromer UA 9033 oder das Laromer UA 19 T der BASF. Die Oligomermischung kann weiterhin niedrigviskose Acrylester mit einer Funktionalität von 1- 4, bevorzugt mit einer Funktionalität von 1- 2 enthalten. Handelsübliche Beispiele dafür sind das Laromer LR 8887, Laromer DPGDA, Laromer TPGDA der BASF. Für die Härtung mittels UV-Strahlung werden Fotoinitiatoren wie z.B. Mono- oder Bisacylphosphinoxide, Alphahydroxyketone, Benzophenonderivate, Benzildimethyketal oder Phenylglyoxalate benötigt. Die Formulierung kann ferner Additive wie Netzmittel, Entschäumer, anorganische oder organische Füllstoffe enthalten. Als Additive können beispielsweise Polyacrylate, Silikone, Talkum, Bariumsulfat, Kreide, Kieselsäure oder auch Polyharnstoffderivate verwendet werden.

Das Material für die zweite Schicht S2 ist vorzugsweise basierend auf einem radikalisch polymerisierbaren Acrylatoligomer (Acrylatsystem) oder einer radikalisch polymerisierbaren Acrylatmischung, bestehend aus einem oder mehreren ungesättigten Acrylaten (Acrylatsystem), eine Polyester, Polyether- und/ oder Polyurethanstruktur enthaltend, mit einer Funktionalität von 1- 8, bevorzugt 3 - 6. Beispiele dafür sind das Laromer PE 9074, Laromer 8863 oder Laromer LR 8987 als Lackrohstoffe der BASF. Bevorzugt enthalten diese Acrylatmischungen weiterhin niedrigviskose Acrylester mit einer Funktionalität von 1- 6, bevorzugt mit einer Funktionalität von 2 - 4. Beispielsweise können folgende Rohstoffe der BASF mit den Handelsbezeichnungen Laromer HDDA, Laromer TMPTA, Laromer PPTTA eingesetzt werden. Im Falle UVvernetzender Systeme werden Fotoinitiatoren wie z.B. Mono- bzw. Bisacylphosphinoxide, Alphahydroxyketone, Benzophenonderivate, Benzildimethylketal oder Phenylglyoxylate zugesetzt. Weiterhin können Additive wie Netzmittel, Entschäumer, Mattierungsmittel sowie anorganische oder organische Füllstoffe zugesetzt werden, beispielsweise Polyacrylate, Silikone, Talkum, Bariumsulfat, Kreide, Kieselsäure oder auch Polyharnstoffderivate. Die Oligomeren werden so ausgewählt, dass die Oberflächenhärte in den oben erwähnten Bereichen liegt. Weiterhin wird die Rohstoffauswahl so getroffen, dass die Schicht S2 neben dämpfenden Eigenschaften vor allem eine hohe Verschleißfestigkeit bringt (Kratzfestigkeit, Mikrokratzfestigkeit, Abriebfestigkeit). Der Fachmann weiß, dass diese Eigenschaften über die Netzwerkdichte und Modifizierungen beispielsweise mit Nanopartikeln erreicht wird.

Die Dicke der Trägerplatte liegt vorzugweise zwischen 3 und 20 mm, mehr bevorzugt zwischen 4 und 15 mm, noch mehr bevorzugt zwischen 3 und 12 mm und am meisten bevorzugt zwischen 4 und 10 mm. Abhängig von Verwendungszweck und aufgebrachtem Dekor (falls vorhanden) sind unterschiedliche Formen möglich. Soll das Paneel beispielsweise ein Echtholzdekor imitieren und als Fußboden- oder Wandpaneel verlegt werden, ist eine rechteckige Grundform der Trägerplatte bzw. des Paneels vorteilhaft, beispielsweise in einer Rechteckform von 1 ½ - 2 m Länge und 10 - 30 cm Breite.

Wie eingangs erwähnt bestimmen sich die relevanten physikalischen Eigenschaften der Oberfläche des erfindungsgemäßen Paneels im Wesentlichen durch das erfindungsgemäße Schichtsystem. Die dicke erste elastische Schicht S1 ist für die akustischen Eigenschaften des Paneels maßgebend. Grundsätzlich bevorzugte Härtewerte nach Martens für die Schicht S1 liegen dabei wie oben erwähnt bei 0,5 - 120 N/mm$^2$, besonders bevorzugt zwischen 2 und 50 N/mm$^2$, noch mehr bevorzugt zwischen 2 und 40 N/mm$^2$, und am meisten bevorzugt zwischen 2 und 30 N/mm$^2$. Die zweite Schicht S2 weist eine größere Härte auf als die erste Schicht und sollte wie oben erwähnt bevorzugt in einem Bereich von zwischen 5 - 300 N/mm$^2$, besonders bevorzugt bei 15 - 150 N/mm$^2$, noch mehr bevorzugt zwischen 20 und 100 N/mm$^2$ und am meisten bevorzugt zwischen 25 und 90 N/mm$^2$ liegen. Dem Fachmann ist klar, dass auch wenn sich die genannten Bereichsangaben für die bevorzugten Härten von Ms1 und Ms2 teilweise überschneiden es im Wesentlichen darauf ankommt, dass Ms2 größer ist als Ms1.

Die Bestimmung der Martenshärte ist dem Fachmann grundsätzlich bekannt. Bei der Entwicklung der vorliegenden Erfindung wurde hierzu mit einem Taber Abraser Prüfgerät 5151 der Firma Taber Industries gearbeitet. Jeweils nach 200 Umdrehungen mit S-41-Schleifpapier wurden die Härte und Spurentiefe der Proben bestimmt. Die Bestimmung der Martenshärte (registrierende Härteprüfung unter Prüfkrafteinwirkung) wurde gemäß DIN EN ISO 14577 durchgeführt. Als Prüfgerät wurde ein "Fischerscope Hioo" der Helmut Fischer GmbH eingesetzt. Folgende Prüfparameter wurden verwendet: Maximalkraft: 50/30 mN sowie Messdauer: 20 Sekunden. Die Bestimmung der Spurtiefe wurde mit einem mechanischen Tastschnittmessgerät durchgeführt. Als Prüfgerät wurde ein Perthometer 53P der Firma Perthen verwendet.

Bei der Vermessung der Proben hat sich gezeigt, dass es wahrscheinlich aufgrund der verwendeten relativ weichen Materialien zu mehr oder weniger großen Abweichungen in der Härte einer gegebenen Schichttiefe kommt. Es ist daher notwendig an mehreren Punkten zu messen, um über eine Mittelwertbildung aussagekräftige, repräsentative Daten zu erhalten. Bei den vorgenommenen Messungen wurden die Härte sowie die Spurentiefe nach 200 Umdrehungen des Schleifpapiers jeweils an vier Stellen gemessen. Es hat sich gezeigt, dass vier Messpunkte in den meisten Fällen eine ausreichende Genauigkeit bieten. Selbstverständlich erhält man noch genauere Messergebnisse, wenn man mehr als vier Messpunkte verwendet, wie beispielsweise acht.

Die Dicke der elastischen Schicht S1 liegt in einem Bereich von 20 - 600 $\mu$m, bevorzugt in einem Bereich von 40 bis 500 $\mu$m, mehr bevorzugt von 80 - 450 $\mu$m und am meisten bevorzugt von 120 - 240 $\mu$m. Die zweite Schicht S2 hat unabhängig von der Dicke der ersten Schicht eine Dicke von 10 - 180 $\mu$m, bevorzugt von 20 - 100 $\mu$m und am meisten bevorzugt von 30 - 80 $\mu$m. Dabei ist es dem Fachmann klar, dass je dicker die erste elastische Schicht S1 gewählt wird, umso elastischer die Eigenschaften der Oberfläche des so beschichteten Paneels sein können. Die Schicht S1 wird vorzugsweise nacheinander in Teilschritten insbesondere über mehrere Walzenwerke mit jeweiligem Angelieren nach den Walzenauftragswerken aufgetragen werden. Unter Angelieren wird verstanden, dass in der jeweiligen Schicht eine radikalische Polymerisation durch Strahlung beispielsweise mittels UV initiiert wird, diese Polymerisation aber schnell zum Abbruch gebracht um so die Haftung der nächsten Schichten sicher zu stellen. Mit anderen Worten, die Teilschichten werden jeweils nicht vollständig ausgehärtet, sondern jeweils nur teilweise. Auf diese Weise wird u.a. auch die Haftung der Teilschichten aufeinander erhöht. Die Schicht S1 kann alternative aber auch in einem einzigen Schritt aufgetragen werden.

Zwischen der Vorderseite und der Schicht S1 ist eine Dekorschicht vorgesehen, die eine Druckfarbe (Tinte) umfasst, bzw. aus dieser Druckfarbe besteht. Der Begriff "Druckfarbe" wird hierin generisch verwendet und soll keine einzelne Farbe sondern Druckfarbe im Allgemeinen bezeichnen: beim digitalen Vierfarbdruck besteht die Druckfarbe z.B. aus vier verschiedenen Farben (Cyan, Magenta, Gelb, Schwarz), aus denen das Druckbild durch Farbmischung der aufgespritzten Farbtröpfchen erzeugt wird. Beim indirekten Tiefdruck wird das Dekorbild bekanntermaßen über rotierende Druckzylinder erzeugt. Mit den Druckzylindern werden dekorspezifische Mischfarben aufgetragen. Grundsätzlich ist es bei der vorliegenden Erfindung bevorzugt, dass die Schichten S1 und S2 im Wesentlichen transparent sind, um als Schutz für eine darunterliegende Dekorschicht dienen zu können.

Üblicherweise kommen im Stand der Technik als Druckfarbe Dispersionsfarben zum Einsatz, wie insbesondere Acrylfarben. Diese Dispersionsfarben werden regelmäßig bei dem üblicherweise zum Einsatz kommenden Tiefdruckverfahren verwendet. Dispersionsfarben sind Druckfarben, die in der Regel aus drei Hauptbestandteilen bestehen, nämlich a) einem Lösungsmittel (üblicherweise Wasser), b) Bindemittel in Form von Kunststoffpolymeren, die sich bei Verdunstung des Lösungsmittels zusammenlagern und einen feste Schicht bilden, sowie c) Farbpigmente zur Erzeugung der gewünschten Deckung und des gewünschten Farbtons. Die Härtung dieser Dispersionsfarben erfolgt also nicht durch eine Polymerisation, sondern durch ein Verflüchtigen des Lösungsmittels, da die Bindemittel bereits als Polymere vorliegen. Die in der Dispersion enthaltenen Polymere verbinden sich bei Verdunstung des Bindemittels auf rein physikalische Weise und bilden eine feste, geschlossene Schicht.

Es wurde im Zusammenhang mit der vorliegenden Erfindung überraschend festgestellt, dass verbesserte Hafteigenschaften von erfindungsgemäßen Schichtsystemen erreicht werden können, wenn im vorliegenden Fall anstelle der üblichen Dispersionsfarben polymerisierbare Druckfarben verwendet werden. Der positive Effekt ist besonders ausgeprägt, wenn die Druckfarbe der Dekorschicht und zumindest ein Teil der ersten elastischen Schicht S1 gemeinsam ausgehärtet bzw. polymerisiert werden (wenn die Dekorschicht direkt aufgedruckt wird, wie etwa im Digitaldruck, besteht die Dekorschicht quasi aus der Druckfarbe). Unter Aushärtung bzw. Teil-Aushärtung (Angelieren) einer Polymerschicht bzw. einer polymerisierbaren Druckfarbe wird hierbei die chemische Reaktion verstanden, die bei der Polymerisation stattfindet. Hiervon zu unterscheiden ist das Trocknen derartiger Schichten, bei dem lediglich das Lösungsmittel, wie etwa der Wassergehalt einer Dispersionsfarbe, verdunstet bzw. auf rein physikalische Weise reduziert wird. Durch die gemeinsame (Teil-)Aushärtung der polymerisierbaren Druckfarbe und der Materialien für die erste elastische Schicht erfolgt vermutlich eine chemische Vernetzung an der Grenzfläche der beiden Schichten, von der angenommen wird, dass sie für die verbesserte Haftung der Schichten insgesamt verantwortlich ist. Die herkömmlich verwendeten Dispersionsfarben weisen keine polymerisierbaren Acrylatsysteme auf, sodass keine derartige chemische Vernetzung zwischen Druckfarbe, also der Dekorschicht, und der elastischen Schicht stattfinden kann.

Allgemein bevorzugt sind die für die vorliegende Erfindung verwendeten Druckfarben daher polymerisierbare Druckfarben und insbesondere polymerisierbare Acrylatsysteme. Polymerisierbare Druckfarben erhalten als Hauptbestandteile Bindemittel, nämliche reaktive Doppelbindungen enthaltene Harze; Monomere bzw. Oligomere, wie etwa Acrylatmonomere und Acrylatoligomere; optional Fotoinitiatoren für strahlenhärtbare Druckfarben; Additive wie etwa Entschäumer, Verlaufsadditive, etc.; und Farbpigmente sowie Füllstoffe zur Erzielung bestimmter physikalisch technischer Eigenschaften. Generell bevorzugt sind die verwendeten Druckfarben für die vorliegende Erfindung weiter strahlenhärtbar, wie insbesondere durch UV-Strahlen härtbare Druckfarben. Besonders bevorzugt ist die Druckfarbe basierend auf einem polymerisierbaren Acrylat und/oder N-Vinylcaprolactam.

Gemäß der vorliegenden Erfindung ist auf der Vorderseite unterhalb der Dekorschicht eine dritte elastische Schicht S3 vorgesehen, die eine Martenshärte $Ms_3$ hat, wobei die Härte der dritten elastischen Schicht gleich oder kleiner der Härte der ersten elastischen Schicht S1 ist, d.h. $Ms_3 \leq Ms1$. Auf diese Weise können besonders dicke Schichtsysteme mit entsprechend guten elastischen Eigenschaften erzeugt werden. Vorzugsweise sollte die Schicht S3 dabei eine Dicke von 10 - 300 $\mu$m haben, mehr bevorzugt von 30 - 150 $\mu$m und am meisten bevorzugt von 60 - 120 $\mu$m. Für die Schicht S3 wird ein radikalisch polymerisierbares Acrylatgemisch verwendet wie sie auch für die Schicht S1 vorgesehen sind und oben beschrieben wurden. Diese Oligomermischung wird vorzugsweise vor der Applikation mit Pigmenten versetzt um der Schicht eine deckende Farbe als Druckgrund zu geben, d.h. diese Schicht S3 sollte vorzugsweise nicht transparent sein um eine genügende Druckqualität zu erreichen. Die Dekorschicht, inkl. evtl. notwendiger Primer- und Grundierungsschichten, wird dann auf diese zuvor aufgebrachte Schicht S3 aufgebracht. Der Vorteil dieser dritten Schicht S3 liegt darin, dass das Gesamtschichtsystem sehr dick gestaltet werden kann, ohne dass der optische Eindruck einer eventuell vorhandenen Dekorschicht beeinträchtigt wird, da zwischen einem Betrachter und der Dekorschicht nur die erste elastische Schicht S1 und die zweite Schicht S2 liegt.

Das erfindungsgemäße Schichtsystem hat weiter den Vorteil, dass keine weiteren Papier- oder Kunststofffolien an der Vorderseite des Paneels bzw. der Trägerplatte notwendig sind, wie es im Stand der Technik bei vielen Anwendungen notwendig war. Die Paneele können somit im Durchlauf in einer Anlage beschichtet werden und müssen nicht mit einer zuvor produzierten Papier- oder Kunststofffolie in Kontakt gebracht und verklebt werden.

In einer weiteren Ausführungsform der Erfindung kann die Dekorschicht, inkl. der evtl. notwendigen Hilfsschichten wir Primer oder Grundierschichten, zwischen der Schicht S1 und der Verschleißschicht S2 angeordnet sein.

Im Folgenden wird ein Verfahren zur Herstellung eines Paneels, wie insbesondere eines Paneels der oben diskutierten Art, beschrieben. Bei diesem Verfahren wird in einem ersten Schritt eine Trägerplatte, wie etwa eine MDF- oder HDF-Trägerplatte bereitgestellt. Auf diese Trägerplatte wird eine Lage aus flüssigem, strahlenhärtbaren Acrylat aufgebracht, das so ausgewählt ist, dass es nach erfolgter Aushärtung einen Martenswert $Ms1$ von 0,5 - 120 N/mm$^2$ aufweist. Mit herkömmlichen Walzenauftragsverfahren können üblicherweise in einem Arbeitsgang Schichtdicken von bis zu 80 $\mu$m, in Ausnahmefällen bis zu 100 $\mu$m, aufgetragen werden. Um die gewünschten Schichtdicken für die erste elastische Schicht S1 zu erreichen, wird es daher üblicherweise notwendig sein, jede einzelne aufgebrachte Lage zu härten, vorzugsweise mittels Strahlung, und auf diese teilweise oder vollständig ausgehärtete erste Lage eine weitere Lage aufzubringen. Da vorzugsweise immer dieselben Materialien verwendet werden, kann somit eine - zumindest hinsichtlich der Härte - homogene elastische Schicht S1 mit einer Dicke von bis zu 600 $\mu$m erzeugt werden. Es können jedoch auch für jede Lage der Schicht S1 unterschiedliche Materialien mit unterschiedlichen Werten für $Ms1$ verwendet werden, die jedoch vorzugsweise nicht zu stark voneinander abweichen sollten und in jedem Fall im erfindungsgemäßen Bereich von 0,5 bis 120 N/mm$^2$ liegen müssen. Bevorzugt ist nämlich eine möglichst homogene Härte in den endgültigen Schicht S1 (oder S2), die am einfachsten durch die Verwendung derselben oder zumindest ähnlicher Materialien erreicht werden kann. Nachdem die gewünschte Enddicke der elastischen Schicht S1 erreicht ist, wird - nachdem diese teilweise oder vollständig ausgehärtet wurde - eine Lage eines weiteren, flüssigen, strahlenhärtbaren Acrylats aufgebracht, wobei dieses so ausgewählt ist, dass die Schicht nach Aushärtung eine Martenshärte $Ms2$ aufweist, die größer ist als die Martenshärte der zuvor aufgebrachten ersten elastischen Schicht. Auch in diesem Fall kann es notwendig sein, mehrere Lagen aufzubringen, mit jeweiligen zwischengeschalteten (Teil-)Aushärtungsschritten, wenn eine besonders große Enddicke der zweiten Schicht S2 gewünscht ist. Auch in diesem Fall können für jede Lage der Schicht S2 unterschiedliche Materialien mit unterschiedlichen Werten für $Ms2$ verwendet werden, solange nur (jedes) $Ms1$ kleiner ist als das kleinste $Ms2$ der einzelnen Lagen der Schicht S2. Jedoch ist es auch hier bevorzugt dieselben oder zumindest ähnliche Materialien für die Teilschichten der Schicht S2 zu verwenden, da dies den Zusammenhalt der Teilschichten verbessert und zu einer höheren Strapazierfähigkeit der Gesamtschicht S2 (bzw. S1) führen kann.

Vorteilhaft wird vor dem Auftragen der ersten Lage der elastischen Schicht S1 auf die Oberfläche der Trägerplatte eine Grundierungsschicht aufgetragen und darauf eine Dekorschicht aufgedruckt. Dies erfolgt vorzugsweise im Direktdruck, wobei die oben in Zusammenhang mit dem erfindungsgemäßen Paneel beschriebenen technischen Angaben auch für das vorliegende Verfahren grundsätzlich anwendbar sind. Mit anderen Worten, die Dekorschicht bzw. das dekorative Muster, wird auch hier vorzugsweise mittels einer polymerisierbaren Druckfarbe aufgebracht, und besonders bevorzugt wird auf die noch nicht (jedenfalls nicht vollständig) ausgehärtete Druckfarbe zumindest eine erste Lage der ersten elastischen Schicht S1 aufgetragen und dann gemeinsam mit der Druckfarbe ausgehärtet. Auf diese Weise erfolgt eine besonders gute Verbindung des Schichtsystems mit der Oberfläche der Trägerplatte.

**Beispiel** 1 (nicht erfindungsgemäß):

In einem ersten Schritt wird eine HDF-Trägerplatte mit einer Stärke von 8 mm über ein Walzenauftragswerk mit einem Primer auf Basis einer handelsüblichen wässrigen Acrylatdispersion mit einem Auftrag von 10 g/m$^2$ versehen. In einem nächsten Schritt erfolgt das Glätten der Platte über ein Walzenauftragswerk mittels einer Spachtelmasse basierend auf einer hochgefüllten wässrigen Acrylatdispersion mit einer Auftragsmenge von 25 g/m$^2$. Anschließend wird ein Druckgrund (Grundierung) auf Basis einer mit Füllstoffen und Farbpigmenten versetzten wässrigen Acrylatdispersion mittels Gießverfahren (d.h. einem Vorhangbeschichtungsverfahren) in einer Menge von 70 g/m$^2$ appliziert. Nach jedem dieser Beschichtungsschritte erfolgt ein Zwischentrocknen bei Temperaturen zwischen 8o und 200 °C. Die so behandelten Platten werden einer Druckmaschine im Wesentlichen bestehend aus einer Gravurwalze und einer Gummiwalze für die Übertragung des Druckbildes vom Gravurzylinder auf die Platte zugeführt. Das Druckbild wird über drei nachgeschaltete Druckwerke erzeugt, wobei durch jedes Druckwerk eine eigene Dispersions-Druckfarbe bestehend aus Farbpigmenten und einer wässrigen Acrylatdispersion aufgetragen wird. Bei einer Imitation eines dunklen Nußbaumholzes werden beispielsweise 5 g/m² Druckfarbe appliziert. Auf die Druckfarbenschicht wird im weiteren Prozess ein handelsüblicher UV-Primer über ein Walzenauftragswerk aufgetragen. Über ein nachfolgendes Walzenauftragswerk wird ein radikalisch polymerisationsfähiges Acrylatoligomergemisch (i) in einer Menge von 8o g/m² aufgetragen. Diese Oligomermischung (i) enthält 70 Teile Laromer PE 9032 und 25 Teile Laromer TBCH der BASF sowie 5 Teile an weiteren Zusätzen (Benzildimethylketal als Fotoinitiator, ein aliphatisches Urethanacrylat mit einer Funktionalität von 3). Mittels UV-Strahler erfolgt ein Angelieren (Teil-Aushärtung) dieser Schicht. Über ein weiteres Walzenauftragswerk wird erneut dieselbe (oder auch alternativ eine ähnliche) Oligomermischung (i) in einer Menge von 8o g/m² aufgetragen und zumindest teilweise ausgehärtet. Auf die so gebildete erste elastische Schicht S1 wird dann in einem dritten Walzenauftragswerk eine Schicht S2 aus einem weiteren doppelbindungshaltigen, mit Photoinitiatoren versehenen strahlenhärtbaren Oligomers (2) in einer Menge von 50 g/m² gelegt und mittels einer UV-Strahlung polymerisiert. Dieses Oligomer (2) besteht aus einer Mischung aus 75 Teilen Laromer PE 9074, 20 Teilen Laromer HDDA der BASF und 5 % weiteren Zusätzen (u.a. Phenylglyoxalat als Fotoinitiator) und hat eine größere Härte (Ms2) als die erste Schicht $S_1$.

**Beispiel** 2 (nicht erfindungsgemäß):

Paneele, bei denen das Druckbild mit strahlenhärtenden Druckfarben erzeugt wird Es wird wieder eine 8 mm starke HDF-Trägerplatte verwendet und wie in Beispiel 1 beschrieben mit wässrigem Primer, Spachtel und Druckgrund versehen. Auf der so behandelten Platte wird mittels Digitaldrucker das gleiche Dekorbild wie in Beispiel 1 erzeugt. Hierbei werden jedoch keine Dispersionsfarben verwendet, sondern UV-strahlenhärtende Digitaldruckfarben. Für die Erzeugung des Druckbildes wird eine Farbmenge von etwa 2 g/m² benötigt. Die Farbe wird zunächst mit 150 mJ/cm² (Quecksilber) fixiert und anschließend wird die erste Lage der Schicht S1 wie im ersten Beispiel aufgetragen und gemeinsam mit der Druckfarbe zumindest teilweise gehärtet (angeliert). Die weiteren Schritte erfolgen dann wie im Beispiel 1.

**Beispiel** 3 (nicht erfindungsgemäß):

Eine HDF-Trägerplatte wird den Fertigungsstufen bis nach der Druckmaschine wie in Beispiel 1 unterzogen. Auf die abgetrocknete Druckfarbe wird ein handelsüblicher wässriger UV-Primer aufgelegt. Die Platte ist durch den vorgelagerten Prozess mit einer Oberflächentemperatur von 50 - 60 °C so aufgewärmt, dass das Wasser des Primers auf der Oberfläche schnell verdunstet und der Primer so fixiert ist. Anschließend wir ein Oligomergemisch (i) wie in Beispiel **1** beschrieben in einer Menge von 50 g/m² mittels Walzenwerk appliziert und mittels UV-Strahlung angeliert. Danach erfolgt ein zweiter Walzenauftrag von 50 g/m² dieses (oder eines ähnlichen) Oligomergemisches (i) mit nachfolgendem Angelieren und schließlich ein dritter Auftrag (i) von 50 g/m² mit nachfolgendem Angelieren, um die Schicht S1 zu bilden. Danach wird über ein Walzenauftragswerk die Verschleiß- bzw. Deckschicht (d.h. Schicht S2) von 30 g/m² appliziert und mittels UV-Strahlung gehärtet. Das Oligomer (2') für die Deckschicht S2 besteht aus einer Mischung aus 75 Teilen Laromer PE 9074, 20 Teilen Laromer HDDA der BASF und 5 % weiteren Zusätzen (u.a. Phenylglyoxalat als Fotoinitiator und einem Mattierungsmittel). Über die Menge des zugesetzten Mattierungsmittels wird der gewünschte Glanzgrad der Oberfläche gesteuert. Die Weiterverarbeitung der Platten zu Fußbodenpaneelen erfolgt wie in Beispiel 1.

**Beispiel** 4 (erfindungsgemäß):

In einem ersten Schritt wird eine HDF-Trägerplatte mit einer Stärke von 8 mm über ein Walzenauftragswerk mit einem Primer auf Basis einer handelsüblichen wässrigen Acrylatdispersion mit einem Auftrag von 10 g/m² versehen. In einem nächsten Schritt erfolgt das Glätten der Platte über ein Walzenauftragswerk mittels einer Spachtelmasse basierend auf einer hochgefüllten wässrigen Acrylatdispersion mit einer Auftragsmenge von 25 g/m². Anschließend wird mittels eines Walzwerkes eine UV-strahlenhärtende Masse in einer Menge von 40 g/m² appliziert. Diese strahlenhärtende Masse besteht aus zu 65 Teilen aus der Oligomermischung (i) aus Beispiel 1 und 35 % feinst dispergiertem Titandioxid. Anschließend wird mittels UV-Strahlung angeliert. Es erfolgt über ein nachgelagertes Walzenauftragswerk ein zweiter Auftrag von 40 g/m² dieser Masse mit nachfolgendem Angelieren. Die so entstandene Schicht entspricht der oben beschriebenen Schicht S3. Danach erfolgt das digitale Bedrucken wie in Beispiel 2. Im Weiteren wird optional ein handelsüblicher UV-Primer in einer Menge von 3 g/m² über ein Walzenauftragswerk aufgetragen. Die weitere Beschichtung mit den Oligomeren (1) und (2) zum Erzeugen der Schichten S1 und S2 erfolgt wie in Beispiel 1 beschrieben, ebenso die Herstellung der Paneele aus den Ausgangsplatten.

Nachfolgend werden für die in den Beispielen 1- 4 hergestellten Fußbodenmaterialien einige ermittelte Eigenschaften dargestellt:

a) Bestimmung der Gehschallemission nach IHD-W 431 (Fassung v. 14.05.2012)

Die Kennwerte wurden unter Nichtbeachtung der Spektren mit der größten und kleinsten Lautheit (Ausreißerkorrektur gemäß IHD-W 431) ermittelt. Das Ergebnis wird als Differenz des A-bewerteten Gesamtschalldruckpegels und der Lautheit der untersuchten Variante gegenüber dem Referenzfußboden ausgewiesen. Die Veränderung der linearen Kenngröße Lautheit (N) wird in Bezug auf die Referenz prozentual wie folgt ermittelt:
Prozentuale Änderung:

$$((Nref - Nf) * 100\,\%)/Nref$$

Der ermittelte Kennwert gibt die prozentuale Erhöhung (negativer Wert) oder Verringerung (positiver Wert) der Lautheitsempfindung an. Referenz ist ein herkömmlicher Laminatboden mit einer Melaminharzbeschichtung und einer Plattenstärke von 8 mm.

*Tabelle 1: A-bewerteter Gesamtschalldruckpegel*

| Variante | **Referenz** (mittleres Spektrum) [dBA (A)] | **Probe** (mittleres Spektrum) [dBA (A)] | **Verbesserungsmaß** [dBA (A)] |
|---|---|---|---|
| Beispiel 1 | 75.3 | 64,8 | 10,5 |
| Beispiel 2 | 75.3 | 65,2 | 10,1 |
| Beispiel 3 | 75,3 | 65,5 | 9,8 |
| Beispiel 4 | 75.3 | 64,3 | 11,0 |
| LVT (PVC) Boden (5 mm Stärke) | 75,3 | 64,9 | 10,4 |

Beispiel 4 zeigt, dass mit der erfindungsgemäßen Beschichtung signifikante Geräuschminderungen beim Begehen erreicht werden können. Eine Reduzierung um 10 dB wird vom menschlichen Gehör als Halbierung der Lautstärke wahrgenommen. Um eine direkte Vergleichbarkeit zu haben, wurden als Trägerplatten bei Beispielen 1- 4 nur HDF-Trägerplatten eingesetzt. Mit alternativen Trägerplatten sind weitere deutliche Geräuschreduzierungen möglich.
Im Folgenden wird die vorliegende Erfindung unter Bezugnahme auf die beigefügten Figuren genauer erläutert. Hierbei zeigen:

Fig. 1a und b beispielhafte Schichtaufbauten in einer schematischen Darstellung; und

Fig. 2 eine beispielhafte Anlage zur Herstellung eines Paneels in schematischer Ansicht.

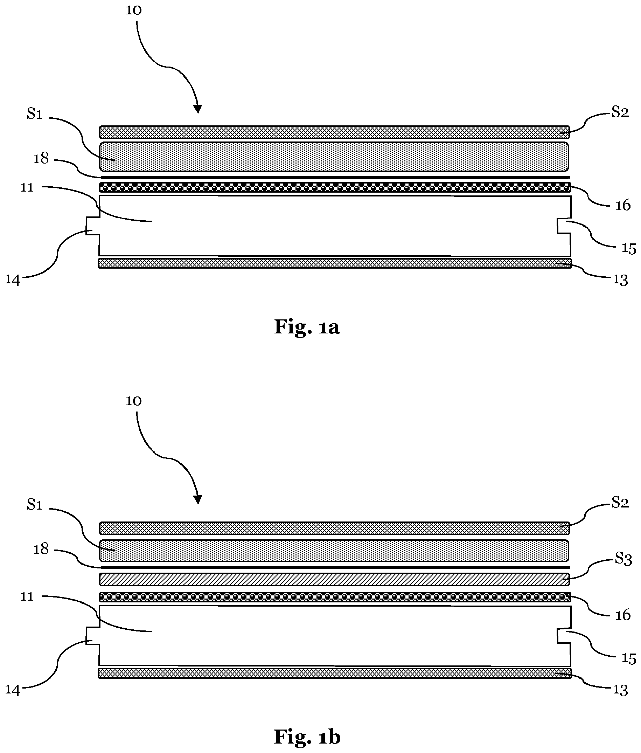

In Fig. 1a ist ein nicht erfindungsgemäßer schematischer Schichtaufbau für ein Paneel 10 gezeigt. Die Darstellung ist rein schematisch und nicht maßstabsgetreu. Insbesondere ist die Trägerplatte 11 erheblich dicker als die weiteren Schichten 12 - 18, die im Bereich von einigen hundert ium liegen. Außerdem sind die einzelnen Schichten zur Vereinfachung des Verständnisses in einer Explosionsansicht gezeigt und sind im realen Fall direkt aneinander angrenzend bzw. direkt aufeinander angeordnet. Im gezeigten Beispiel ist eine Trägerplatte 11 mit einer Dicke von ca. 8 mm aus HDF-Material gezeigt. An der Rückseite der Trägerplatte 11 ist eine Feuchtigkeitsbarriere 13 in Form einer geeigneten Kunststofffolie aufgeklebt. Diese Feuchtigkeitsbarriere ist optional und abhängig vom Material für die Trägerplatte 11 und dem gewünschten Einsatzgebiet. Die Trägerplatte 11 weist zudem Kopplungsmittel in Form von Nut- 15 und Federelementen 14 auf, die in der Fig. la (und b) jedoch nur schematisch angedeutet sind. Geeignete Kopplungsmittel in Form von Nut- und Federelementen, die ein Verbinden mehrerer gleichartiger Paneele in Richtungen parallel zur Vorderseite als auch senkrecht zur Vorderseite durch Formschluss erlauben sind dem Fachmann geläufig. Üblicherweise sind an den vier Seiten einer recht- oder viereckigen Trägerplatte hierfür jeweils gegenüberliegend komplementäre Verbindungsmittel vorgesehen. Details zu derartigen Verbindungsmitteln bzw. Verriegelungsprofilen sind dem Fachmann aus der Technologie der Laminatbodenherstellung bekannt, wie z. B. aus der WO 0188306 oder der WO 0148332 desselben Anmelders, die hiermit durch in Bezugnahme vollständig aufgenommen werden.
Im gezeigten Schichtsystem des Paneels 10 ist eine Grundierungsschicht 16 mit einer Dicke von beispielsweise 50 - 200 μm vorgesehen, die auf einem wässrigen Acrylatsystem basiert. Unterhalb der Grundierung können weitere sehr dünne Primerschichten und/ oder auch Spachtelschichten aufgebracht werden, wie sie dem Fachmann aus dem Gebiet der direkt bedruckten Paneele bekannt sind. Auf der Grundierung 16 ist eine Dekorschicht bzw. ein Dekor 18 aufgedruckt. Das Dekor 18 bzw. die Dekorschicht 18 wurden beispielsweise mittels einer polymerisierbaren Druckfarbe im digitalen Vierfarbdruck aufgebracht. Über der Dekorschicht 18 befindet sich eine erste elastische Schicht S1 mit einer Dicke von 200 $\mu$m und einer Martenshärte Ms$_1$ von 15 N/mm$^2$. Auf diese erste elastische Schicht S1 ist eine zweite Schicht S2 aufgetragen, die eine Dicke von 8o $\mu$m und eine Martenshärte von ca. 25 N/mm$^2$ hat. Das erfindungsgemäße Beispiel der Fig. 1b entspricht dem Beispiel der Fig. la mit dem Unterscheid, dass hier zwischen der Grundierungsschicht 16 und der Dekorschicht 18 eine weitere elastische Schicht S3 vorgesehen ist. Die Schicht S3 hat dabei eine Martenshärte Ms$_3$ die geringer oder gleich der Martenshärte der Schicht S1 ist, also Ms$_3 \leq$Ms1. Beim Beispiel der Fig. 1b kann die erste Schicht S1 etwas dünner ausgebildet sein, als im Beispiel der Fig. la, was in den beiden Figuren durch unterschiedliche Dicken schematisch angedeutet ist.

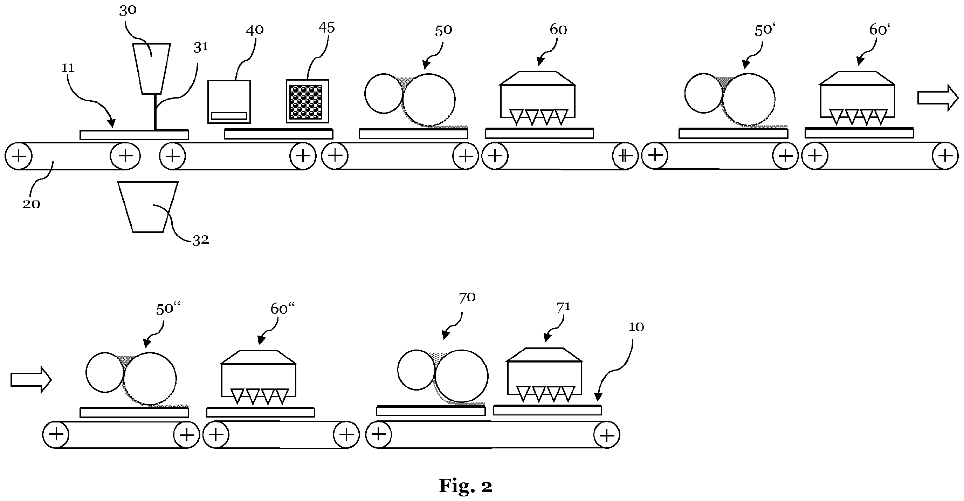

Im Folgenden soll anhand der Fig. 2 beispielhaft die Herstellung eines Paneels beschrieben werden. Fig. 2 zeigt schematisch eine Beschichtungsanlage zur Beschichtung von Trägerplatten 11. Die Trägerplatten werden nach der Beschichtung in einer separaten Profilierungslinie (nicht gezeigt) zurechtgeschnitten und profiliert. Die Trägerplatten 11 haben beispielsweise eine Dicke zwischen 3 und 20 mm, eine Länge (in Transportrichtung der Anlage aus Fig. 2 gesehen) von 150 - 200 cm und eine Breite von 125 - 210 cm. Es können jedoch auch beliebig andere Plattenmaße für die Trägerplatten verwendet werden, die am Ende des Prozesses in die gewünschte Form und Größe geschnitten werden. Die in der Fig. 2 dargestellten Stationen der Anlage sind nicht abschließend zu verstehen, sondern dienen nur beispielhaft der Erläuterung des erfindungsgemäßen Verfahrens. Vor, hinter und zwischen den gezeigten Stationen können weitere Bearbeitungsstationen vorgesehen sein, wie beispielsweise weitere Trocknungsstationen, Stationen zur Aufbringung von Primern, Stationen zur Aufbringung von Spachtelmasse, Kontroll- und Überwachungsvorrichtungen, etc. Die Trägerplatten werden z. B. über Rollenförderanlagen 20 durch die Beschichtungsanlage transportiert.

In der ersten dargestellten Station 30 wird eine Grundierungsmasse mittels eines flüssigen Vorhangs 31 von Beschichtungsmaterial auf die Vorderseite (Hauptseite) der Trägerplatten 11 aufgetragen. Der flüssige Vorhang 31 erstreckt sich über die komplette Plattenbreite und die Platten werden durch diesen Vorhang hindurch transportiert und dabei beschichtet. Unterhalb der Vorrichtung 30 zur Ausgabe des Vorhangs befindet sich ein Auffangbehälter 32, in den der flüssige Vorhang fällt, wenn keine Platte durch den Vorhang hindurch geführt wird, wie beispielsweise bei der Lücke zwischen zwei aufeinanderfolgenden Platten. Als Beschichtungsmaterial für die Grundierung wird vorzugsweise eine wässrige Acrylatdispersion verwendet. In einer darauffolgenden Trocknungsstation 40 wird die aufgetragene Grundierung mit Heißluft getrocknet, d. h. der wässrigen Acrylatdispersion wird das Wasser entzogen. Nach Trocknung der Grundierung wird mittels einer Digitaldruckanlage 45 eine Dekorschicht auf die Grundierung aufgedruckt. Diese Dekorschicht kann beispielsweise ein Echtholz imitieren, jedoch sind die heutzutage kommerziell erhältlichen Digitaldruckanlagen in der Lage praktisch jedes gewünschte Dekor oder Muster auf die Platten zu drucken. Vorzugsweise kommt in der Druckanlage 45 eine Druckfarbe zum Einsatz, die mittels Strahlung polymerisierbar ist, d. h. eine Druckfarbe, die auf einem polymerisierbaren Acrylat basiert und/oder N-Vinylcaprolactam. Dem Fachmann ist es klar, dass die Darstellung der Digitaldruckanlage 45 nur rein schematisch ist und dass derartige Druckanlagen in der Regel aus mehreren Stationen bestehen. Nach dem Aufdruck des gewünschten Dekors wird in einer ersten Beschichtungsanlage 50 eine erste Lage aus flüssigem strahlenhärtbarem aliphatischem Acrylat aufgetragen. Das Material ist so gewählt, dass es nach der Aushärtung eine Martenshärte Ms1 von 0,5 - 120 N/mm$^2$ aufweist. Die Anlage 50 ist eine Walzenauftragsanlage und ist in der Lage eine Schichtdicke von ca. 40 $\mu$m in einem Arbeitsgang aufzubringen. In der darauffolgenden Station 6o wird die aufgetragene Lage von flüssigem strahlenhärtbarem aliphatischem Acrylat mittels UV-Strahlung zumindest teilweise ausgehärtet. Daran anschließend folgt eine zweite Anlage 50' zum Auftragen einer zweiten Lage aus demselben flüssigen, strahlenhärtbaren Acrylat, wie das der ersten Lage. Auch hier ist die Station 50' eine Walzenauftragsstation, die üblicherweise Schichtdicken von 30 $\mu$m aufzutragen in der Lage ist. In Station 60' wird diese zweite Lage durch UV-Strahlung zumindest teilweise ausgehärtet. Daran anschließend wird in einer dritten Beschichtungsanlage 50" eine dritte Lage aus demselben flüssigen, strahlenhärtbaren Acrylat aufgetragen und in der dritten Strahlungsstation 60" mittels UV-Strahlung zumindest teilweise ausgehärtet. In der schematischen Darstellung der Fig. 2 sind somit drei derartige Anlagen gezeigt, die in der Lage sind, drei Lagen einer Schicht aufzubringen, jedoch können auch mehr oder weniger Anlagen vorhanden sein, abhängig von der gewünschten Gesamtdicke der ersten elastischen Schicht S1. Am Ausgang der letzten Strahlungsstation 60" liegt jedenfalls eine erste elastische Schicht S1 mit einer Dicke von ca. 150 $\mu$m vor. Auf diese erste elastische Schicht S1 wird dann in einer Auftragsstation 70 eine Lage aus flüssigem strahlenhärtbaren Acrylat aufgetragen, das so gewählt ist, dass es nach der Aushärtung eine Martenshärte Ms2 aufweist, die größer ist als die Martenshärte der ersten elastischen Schicht und bevorzugt bei 5 - 300 N/mm$^2$ liegt. In Fig. 2 ist hier beispielhaft nur eine Auftragsanlage 70 und eine Station 71 zur Strahlhärtung gezeigt, jedoch können auch für die zweite Schicht S2 mehrere Anlagen vorgesehen sein, abhängig von der gewünschten endgültigen Dicke der Schicht der S2. Am Ausgang der Beschichtungsanlage liegt dann ein beschichtetes Paneel vor, das wie gewünscht weiterverarbeitet werden kann.

**Patentansprüche**

1. Paneel (10), insbesondere Wand-, Decken,- oder Fußbodenpaneel, umfassend eine Trägerplatte (11) mit einer Vorderseite und einer Rückseite, wobei die Trägerplatte (11) zumindest an der Vorderseite ein Schichtsystem aufweist, welches Schichtsystem von der Vorderseite ausgehend aufweist:

   eine erste elastische Schicht S1 aus einem Polymer, die eine Dicke von 20 bis 600 $\mu$m hat und eine Martenshärte $M_{S1}$ gemäß DIN EN ISO14577 von 0,5 bis 120 N/mm$^2$;
   sowie eine zweite Schicht S2 aus einem Polymer, die eine Dicke von 10 bis 180 $\mu$m hat und eine Martenshärte $M_{S2}$ gemäß DIN EN IS014577, wobei $M_{S2} > M_{S1}$ ist;
   **dadurch gekennzeichnet, dass** zwischen der Vorderseite und der Schicht S1 weiter eine Dekorschicht (18) umfassend eine Druckfarbe vorgesehen ist und
   zwischen der Vorderseite und der Dekorschicht eine dritte elastische Schicht S3 vorgesehen ist, die eine Martenshärte $M_{S3}$ gemäß DIN EN ISO14577 hat, mit $M_{S3} \leq M_{S1}$.

2. Paneel nach Anspruch 1, **dadurch gekennzeichnet, dass** das Polymer der Schicht S1 ein aliphatisches Polymer ist.

3. Paneel nach einem der vorhergehenden Ansprüche, **dadurch gekennzeichnet, dass** $M_{S1}$ zwischen 2 und 50 N/mm$^2$ liegt, noch mehr bevorzugt zwischen 2 und 40 N/mm$^2$, und am meisten bevorzugt zwischen 2 und 30 N/mm$^2$.

4. Paneel nach einem der vorhergehenden Ansprüche, **dadurch gekennzeichnet, dass** $M_{S2}$ zwischen 5 und 300 N/mm$^2$ liegt, bevorzugt 15 und 150 N/mm$^2$, noch mehr bevorzugt zwischen 20 und 100 N/mm$^2$ und am meisten bevorzugt zwischen 25 und 90 N/mm$^2$.

5. Paneel nach einem der vorhergehenden Ansprüche, **dadurch gekennzeichnet, dass** die erste elastische Schicht S1 eine Dicke von 40 bis 500 $\mu$m hat, bevorzugt von 80 bis 450 $\mu$m und am meisten bevorzugt von 120 bis 240 $\mu$m.

6. Paneel nach einem der vorhergehenden Ansprüche, **dadurch gekennzeichnet, dass** die zweite elastische Schicht S2 eine Dicke von 10 bis 180 $\mu$m hat, bevorzugt von 20 bis 100 $\mu$m und am meisten bevorzugt von 30 bis 80 $\mu$m.

7. Paneel nach einem der vorhergehenden Ansprüche, **dadurch gekennzeichnet, dass** die Trägerplatte (11) an ihren Seiten über Kopplungsmittel in Form von Nut- und Federelementen verfügt, die ein Verbinden mehrerer gleichartiger Paneele in Richtungen parallel zur Vorderseite als auch senkrecht zur Vorderseite durch Formschluss erlauben.

8. Paneel nach Anspruch 1, **dadurch gekennzeichnet, dass** die Schicht S3 eine Dicke von 10 bis 300 $\mu$m hat, vorzugsweise von 30 bis 150 $\mu$m und am meisten bevorzugt von 60 bis 120 $\mu$m.

9. Paneel nach einem der vorhergehenden Ansprüche 1 bis 8, **dadurch gekennzeichnet, dass** die Druckfarbe auf einem polymerisierbaren Acrylat basiert und/oder N-Vinylcaprolactam.

10. Paneel nach einem der vorhergehenden Ansprüche 1 bis 9, **dadurch gekennzeichnet, dass** die Druckfarbe der Dekorschicht (18) und zumindest ein Teil der Schicht S1 gemeinsam gehärtet wurden, vorzugsweise durch Strahlung.

11. Paneel nach einem der vorhergehenden Ansprüche, **dadurch gekennzeichnet, dass** die Trägerplatte (11) eine MDF-Platte, HDF-Platte, PVC-Platte, Zementfaserplatte, WPC-Platte (Wood Powder Composite), thermoplastische Recyclingplatte, Holzplatte, Holzfurnierplatte oder Parkettplatte ist.

12. Paneel nach einem der vorhergehenden Ansprüche, **dadurch gekennzeichnet, dass** an der Vorderseite des Paneels (10) keine Papier- oder Kunststofffolie angebracht ist.

13. Paneel nach einem der vorhergehenden Ansprüche, **dadurch gekennzeichnet, dass** das Paneel (10) nicht mit abriebfesten Partikeln, wie insbesondere Aluminiumoxidpartikeln, versehen ist.

14. Paneel nach einem der vorhergehenden Ansprüche, **dadurch gekennzeichnet, dass** das Schichtsystem eine Dämpfungswirkung von zumindest 5 dB, vorzugsweise zumindest 8 dB und am meisten bevorzugt zumindest 9 dB hat verglichen mit der unbeschichteten Trägerplatte, gemessen nach EPLF-Norm.

15. Paneel nach einem der vorhergehenden Ansprüche, **dadurch gekennzeichnet, dass** die Härte der elastischen Schicht S1 über die gesamte Dicke im Wesentlichen konstant ist, und insbesondere die Härtedifferenzen innerhalb der Schicht geringer als 20 N/mm$^2$ sind, vorzugsweise geringer als 15 N/mm$^2$ sind und noch mehr bevorzugt geringer als 10 N/mm$^2$ sind.

**Claims**

1. Panel (10), in particular wall, ceiling or floor panel, comprising a carrier plate (11) with a front side and a rear side, wherein the carrier plate (11) has a layer system at least on the front side, which layer system has, starting from the front side:

   a first elastic layer S1 made of a polymer, which has a thickness of 20 to 600 $\mu$m and a Martens hardness $M_{S1}$ according to DIN EN ISO 14577 of 0.5 to 120 N/mm$^2$;
   and a second layer S2 made of a polymer, which has a thickness of 10 to 180 $\mu$m and a Martens hardness $M_{S2}$ according to DIN EN ISO 14577, wherein $M_{S2} > M_{S1}$; **characterised in that** a decorative layer (18) comprising a printing ink is further provided between the front side and the layer S1 and
   a third elastic layer S3 is provided between the front side and the decorative layer, which has a Martens hardness $M_{S3}$ according to DIN EN ISO 14577, with $M_{S3} \leq M_{S1}$.

2. Panel according to claim 1, **characterised in that** the polymer of the layer S1 is an aliphatic polymer.

3. Panel according to one of the preceding claims, **characterised in that** $M_{S1}$ is between 2 and 50 N/mm$^2$, even more preferably between 2 and 40 N/mm$^2$, and most preferably between 2 and 30 N/mm$^2$.

4. Panel according to one of the preceding claims, **characterised in that** $M_{S2}$ is between 5 and 300 N/mm$^2$, preferably 15 and 150 N/mm$^2$, even more preferably between 20 and 100 N/mm$^2$, and most preferably between 25 and 90 N/mm$^2$.

5. Panel according to one of the preceding claims, **characterised in that** the first elastic layer S1 has a thickness of 40 to 500 $\mu$m, preferably of 80 to 450 $\mu$m, and most preferably of 120 to 240 $\mu$m.

6. Panel according to one of the preceding claims, **characterised in that** the second elastic layer S2 has a thickness of 10 to 180 $\mu$m, preferably of 20 to 100 $\mu$m, and most preferably of 30 to 80 $\mu$m.

7. Panel according to one of the preceding claims, **characterised in that** the support plate (11) has, on its sides, coupling means in the form of tongue and groove elements, which allow a plurality of similar panels to be connected in directions parallel to the front side and also perpendicular to the front side by positive locking.

8. Panel according to claim 1, **characterised in that** the layer S3 has a thickness of 10 to 300 $\mu$m, preferably of 30 to 150 $\mu$m, and most preferably of 60 to 120 $\mu$m.

9. Panel according to one of the preceding claims 1 to 8, **characterised in that** the printing ink is based on a polymerisable acrylate and/or N-vinylcaprolactam.

10. Panel according to one of the preceding claims 1 to 9, **characterised in that** the printing ink of the decorative layer (18) and at least part of the layer S1 have been cured together, preferably by radiation.

11. Panel according to one of the preceding claims, **characterised in that** the support plate (11) is an MDF plate, HDF plate, PVC plate, cement fibre plate, WPC plate (wood powder composite), thermoplastic recycled plate, wood plate, wood veneer plate or parquet plate.

12. Panel according to one of the preceding claims, **characterised in that** no paper or plastic film is applied to the front side of the panel (10).

13. Panel according to one of the preceding claims, **characterised in that** the panel (10) is not provided with abrasion-resistant particles, such as in particular aluminium oxide particles.

14. Panel according to one of the preceding claims, **characterised in that** the layer system has a damping effect of at least 5 db, preferably at least 8 db, and most preferably at least 9 db compared to the uncoated carrier plate, measured according to the EPLF standard.

15. Panel according to one of the preceding claims, **characterised in that** the hardness of the elastic layer S1 is substantially constant over the entire thickness, and in particular the differences in hardness within the layer are less than 20 N/mm$^2$, preferably less than 15 N/mm$^2$, and even more preferably less than 10 N/mm$^2$.

**Revendications**

1. Panneau (10), en particulier panneau de mur, de plafond ou de sol, incluant une plaque de support (11) avec un côté avant et un côté arrière, la plaque de support (11) comportant un système de couches au moins sur le côté avant, le système de couches comportant à partir du côté avant :

   une première couche élastique $S_1$ en un polymère, qui a une épaisseur de 20 à 600 $\mu$m et une dureté Martens $M_{S1}$ selon DIN EN ISO14577 de 0,5 à 120 N/mm$^2$ ;
   ainsi qu'une seconde couche $S_2$ en un polymère, qui a une épaisseur de 10 à 180 $\mu$m et une dureté Martens $M_{S2}$ selon DIN EN ISO14577, avec $M_{S2} > M_{S1}$ ;
   **caractérisé en ce que,** entre le côté avant et la couche $S_1$ est en outre prévue une couche décorative (18) incluant une encre, et
   entre le côté avant et la couche décorative est prévue une troisième couche élastique $S_3$ qui a une dureté Martens $M_{S3}$ selon DIN EN ISO14577, avec $M_{S3} \leq M_{S1}$.

2. Panneau selon la revendication 1, **caractérisé en ce que** le polymère de la couche $S_1$ est un polymère aliphatique.

3. Panneau selon une des revendications précédentes, **caractérisé en ce que** $M_{S1}$ est compris entre 2 et 50 N/mm$^2$, encore plus préférentiellement entre 2 et 40 N/mm$^2$ et le plus préférentiellement entre 2 et 30 N/mm$^2$.

4. Panneau selon une des revendications précédentes, **caractérisé en ce que** $M_{S2}$ est compris entre 5 et 300 N/mm$^2$, préférentiellement entre 15 et 150 N/mm$^2$, encore plus préférentiellement entre 20 et 100 N/mm$^2$ et le plus préférentiellement entre 25 et 90 N/mm$^2$.

5. Panneau selon une des revendications précédentes, **caractérisé en ce que** la première couche élastique $S_1$ a une épaisseur de 40 à 500 $\mu$m, préférentiellement de 80 à 450 $\mu$m et le plus préférentiellement de 120 à 240 $\mu$m.

6. Panneau selon une des revendications précédentes, **caractérisé en ce que** la seconde couche élastique $S_2$ a une épaisseur de 10 à 180 $\mu$m, préférentiellement de 20 à 100 $\mu$m et le plus préférentiellement de 30 à 80 $\mu$m.

7. Panneau selon une des revendications précédentes, **caractérisé en ce que** la plaque de support (11) dispose, sur ses côtés, de moyens de couplage en forme d'éléments à rainure et languette qui permettent un assemblage par complémentarité de formes de plusieurs panneaux de même type dans des directions parallèle au côté avant ainsi que perpendiculaire au côté avant.

8. Panneau selon la revendication 1, **caractérisé en ce que** la couche $S_3$ a une épaisseur de 10 à 300 $\mu$m, préférentiellement de 30 à 150 $\mu$m et le plus préférentiellement de 60 à 120 $\mu$m.

9. Panneau selon une des revendications précédentes 1 à 8, **caractérisé en ce que** l'encre est à base d'un acrylate polymérisable et/ou de N-vinylcaprolactame.

10. Panneau selon une des revendications précédentes 1 à 9, **caractérisé en ce que** l'encre de la couche décorative (18) et au moins une partie de la couche $S_1$ ont été durcies ensemble, préférentiellement par irradiation.

11. Panneau selon une des revendications précédentes, **caractérisé en ce que** la plaque de support (11) est une plaque en MDF, une plaque en HDF, une plaque en PVC, une plaque en fibrociment, une plaque en WPC *(Wood Powder Composite),* une plaque thermoplastique recyclée, une plaque en bois, une plaque de placage de bois et une plaque de parquet.

12. Panneau selon une des revendications précédentes, **caractérisé en ce que** il n'est pas appliqué de feuille de papier ou de matière synthétique sur le côté avant du panneau (10).

**13.** Panneau selon une des revendications précédentes, **caractérisé en ce que** le panneau (10) n'est pas muni de particules résistantes à l'abrasion, telles qu'en particulier des particules d'oxyde d'aluminium.

**14.** Panneau selon une des revendications précédentes, **caractérisé en ce que** le système de couches a un effet amortissant, mesuré selon la norme EPLF, d'au moins 5 dB, préférentiellement d'au moins 8 dB et le plus préférentiellement d'au moins 9 dB, par rapport à une plaque de support non revêtue.

**15.** Panneau selon une des revendications précédentes, **caractérisé en ce que** la dureté de la couche élastique $S_1$ est sensiblement constante sur toute l'épaisseur et, en particulier, les différences de dureté à l'intérieur de la couche sont inférieures à 20 N/mm$^2$, préférentiellement inférieures à 15 N/mm$^2$ et encore plus préférentiellement inférieures à 10 N/mm$^2$.

**Fig. 1a**

**Fig. 1b**

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006058655 A1
- DE 102006029963 A1
- WO 2007042258 A
- WO 2008061791 A1
- WO 0188306 A
- WO 0148332 A